# EUROPÄISCHE PATENTSCHRIFT

(11) **EP 1 984 203 B1**
(45) Veröffentlichungstag und Bekanntmachung des Hinweises auf die Patenterteilung: **16.07.2014**
(21) Anmeldenummer: 07702748.0
(22) Anmeldetag: 13.01.2007
(51) Int. Cl.: B60L 9/00, B60L 9/08, B60L 13/00

(54) **TRANSPORTSYSTEM**
TRANSPORT SYSTEM
SYSTÈME DE TRANSPORT

(30) Priorität: 03.02.2006 DE 102006005487; 20.10.2006 DE 102006049588
(43) Veröffentlichungstag der Anmeldung: 29.10.2008
(60) Teilanmeldung: 11001905.6
(73) Patentinhaber: SEW-EURODRIVE GmbH & Co. KG, 76646 Bruchsal (DE)
(72) Erfinder: WOLF, Konstantin, 76698 Ubstadt-Weiher (DE); SCHMIDT, Josef, 76676 Graben-Neudorf (DE); BECKER, Günter, 76684 Östringen (DE); PODBIELSKI, Leobald, 76199 Karlsruhe (DE)
(86) Internationale Anmeldenummer: PCT/EP2007/000276
(87) Internationale Veröffentlichungsnummer: WO 2007/090500

(56) Entgegenhaltungen:
- EP-A1- 1 238 880
- EP-B1- 0 814 994
- WO-A-98/57413
- WO-A-2007/007028
- DE-A1- 2 406 080
- DE-A1- 10 014 954
- DE-C- 553 540
- DE-C- 662 818
- US-A- 5 855 261
- BYEONG-MUN SONG ET AL: "Contactless inductive power pickup system for maglev applications" CONFERENCE RECORD OF THE 2002 IEEE INDUSTRY APPLICATIONS CONFERENCE. 37TH IAS ANNUAL MEETING . PITTSBURGH, PA, OCT. 13 - 18, 2002, CONFERENCE RECORD OF THE IEEE INDUSTRY APPLICATIONS CONFERENCE. IAS ANNUAL MEETING, NEW YORK, NY : IEEE, US, Bd. 1 OF 4. CONF. 37, 13. Oktober 2002 (2002-10-13), Seiten 1586-1591, XP010610091 ISBN: 0-7803-7420-7

## Beschreibung

Die Erfindung betrifft ein Transportsystem.

Aus der DE 44 46 779 C2 ist ein berührungsloses Energieübertragungssystem bekannt mit U-förmigem Übertragerkopf. Aus der DE 197 35 624 C1 ist ebenfalls ein solches System bekannt.

Aus der WO 92/17929 ist ein berührungsloses Energieübertragungssystem bekannt mit E-förmigem Übertragerkopf.

Aus der JP H5-207605 ist ein berührungsloses Energieübertragungssystem bekannt mit C-förmigem Übertragerkopf.

Aus der DE 195 12 107 A1 ist ein Leckwellenleiter zur Informationsübertragung bekannt.

Aus der EP 0 814 994 B1 ist ein spurgeführtes Transportvorrichtung mit Energie- und Informationsübertragung bekannt.

Aus der WO 98/57413 A ist eine kabellose Signalübertragung bei einem System zur induktiven Übertragung elektrischer Leistung bekannt.

Aus der Veröffentlichung BYEONG-MUN SONG ET AL: Contactless inductive power pickup system for maglev applications" CONFERENCE RECORD OF THE 2002 IEEE INDUSTRY APPLICATIONS CONFERENCE 37TH IAS ANNUALMEETING. PITTSBURGH, PA, OCT. 13-18, 2002, CONFERENCE RECORD OF THE IEEE INDUSTRY APPLICATIONS, IAS ANNUAL MEETING, NEW YORK, NY: IEEE, US, Bd. 1 OF 4. CONF. 37, 13. Oktober 2002, Seiten 1586 - 1591, XP010610091 ISBN: 0-7803-7420-7 ist ein kontaktloses induktives Leistungsübertragungssystem bekannt, das für MAGLEV Anwendungen geeignet ist.

Der Erfindung liegt daher die Aufgabe zugrunde, ein Transportsystem weiterzubilden, das vielseitig einsetzbar und einfach herstellbar ist.

Erfindungsgemäß wird die Aufgabe bei dem Transportsystem nach den in Anspruch 1 angegebenen Merkmalen gelöst.

Wichtige Merkmale bei dem Transportsystem nach Anspruch 1 sind, dass es ein Schienensystem und darauf bewegbar angeordnete Wagen umfasst, wobei am Schienensystem ein Primärleitersystem vorgesehen ist, an das zumindest eine vom jeweiligen Wagen umfasste Sekundärspule induktiv gekoppelt ist zur berührungslosen Übertragung elektrischer Leistung und/oder Information. Von Vorteil ist dabei, dass der Wagen verschleißfrei versorgbar ist und auf dem Schienensystem verfahrbar ist.

**Erfindungsgemäß** ist ein geschlitzter Koaxialleiter, also Leckwellenleiter, parallel zu Hinleiter und Rückleiter vorgesehen, an dem eine Antenne des Wagens zur Hochfrequenz-Datenübertragung entlang bewegbar ist, insbesondere beim Bewegen des Wagens. Von Vorteil ist dabei, dass ein hoher Datenstrom sicher und störungsarm übertragbar ist.

**Erfindungsgemäß** ist die Datenübertragung redundant ausgeführt, insbesondere einerseits über die induktive Koppelung des Primärleiters zu einer Sekundärwicklung und andererseits über die Koppelung der Antenne zum Primärleiter. Von Vorteil ist dabei, dass die Sicherheit bei der Datenübertragung erhöhbar ist.

Bei einer vorteilhaften Ausgestaltung ist der aus der Sekundärspule versorgte Wagen mittels eines Wirbelstromantriebs am Schienensystem antreibbar, insbesondere wobei der Antrieb zumindest eine von einem Elektromotor angetriebene Scheibe umfasst, die abwechselnd orientierte Magnetbereiche umfasst, welche mit einem am Schienensystem ausgebildeten Bereich zusammenwirken, insbesondere wobei der Bereich am herausragendes Schwert am Profil der Schiene ausgebildet ist. Von Vorteil ist dabei, dass das Schienensystem selbst als Reaktionsteil für den Wirbelstrommotor vorsehbar ist. Es ist also nur entsprechend auszuformen und es werden keine weiteren zusätzlichen Teile notwendig. Außerdem ist die Wärme direkt über das Schienenprofil abführbar. Somit ist eine hohe Leistung des Antriebs dimensionierbar.

Bei einer vorteilhaften Ausgestaltung sind am Schienenprofil Laufflächen für Führungsrollen der Räder des Wagens ausgebildet, insbesondere zur Selbstzentrierung gekrümmte Laufflächen. Von Vorteil ist dabei, dass das Schienenprofil durch bloße Ausformung die Zusatzfunktion der Laufflächen, also der Zentrierung des Wagens übernimmt. Außerdem ist dabei die Krümmung derart gestaltbar, dass eine Selbstzentrierung erfolgt. Dabei ist es vorteilhaft zwei, vorzugsweise zueinander spiegelsymmetrische, gekrümmte Laufflächen zu gestalten, so dass die von den jeweiligen Führungsrollen bewirkten Normalkräfte auf die Laufflächen eine resultierende Kraft erzeugen, die in Gravitationsrichtung gerichtet ist. Bei Abweichungen von der stabilen Lage ergeben sich Kippkräfte, die derart gerichtet sind, dass der Wagen in die stabile Lage gekippt wird. Dabei nimmt der Betrag dieser rückstellenden Kraft mit der Winkelabweichung von der stabilen Lage aus zu. Vorzugsweise ist der Betrag proportional zur Winkelabweichung. Somit werden auch kleine Abweichungen schnell bedämpft.

Insbesondere sind kreisförmig gekrümmte Laufflächen besonders einfach herzustellen.

Um große Auslenkungen aus der stabilen Lage stark abzudämpfen sind auch Abweichungen von den kreisförmigen Krümmungen vorteilhaft.

Bei einer vorteilhaften Ausgestaltung ist am Schienenprofil ein Kabelkanalhalter einklemmbar, auf den ein Halteprofil zur Aufnahme von Hin- und/oder Rückleiter des Primärleitersystems verbindbar ist, insbesondere aufklipsbar, formschlüssig und/oder kraftschlüssig. Von Vorteil ist dabei, dass das Schienenprofil auch zum Befestigen der Primärleiter dient und somit die relative Lage zwischen Wagen und Schienenprofil genau einhaltbar ist.

Bei einer vorteilhaften Ausgestaltung ist am Schienenprofil ein Halteblech zur Aufnahme eines Koaxialleiters kraft- und/oder formschlüssig, insbesondere einklemmbar, verbindbar, insbesondere wobei eine Antenne am Wagen vorgesehen ist, die beim Bewegen des Wagens entlang dem Koaxialleiter bewegbar ist. Von Vorteil ist dabei, dass auch der Datenaustausch einfach und kostengünstig bewerkstelligbar ist.

Bei einer vorteilhaften Ausgestaltung ist am Schienenprofil eine Aufnahme für Versorgungsleitungen vorgesehen, insbesondere zur Versorgung benachbarter Streckenabschnitte des Systems. Von Vorteil ist dabei, dass weitere Streckenabschnitte versorgbar sind. Überraschenderweise sind also die Versorgungsleitungen für die Primärleiter des nächsten Streckenabschnittes am Schienenprofil des ersten Abschnitts befestigbar und es sind keine nachteiligen Magnetfelder im ersten Abschnitt vorhanden, die die dortige Energieübertragung stören oder verschlechtern. Die Versorgungsleitungen sind beispielsweise als Netzversorgungsleitungen ausführbar zur Versorgung von dem nächsten Streckenabschnitt zugeordneten Einspeisegeräten. Ein solches Einspeisegerät umfasst Wechselrichter zur Herstellung mittelfrequenter Spannungen, aus denen ein Gyrator speisbar ist, welcher Ströme erzeugt, die dem jeweiligen Primärleitersystem einspeisbar sind.

Wichtige Merkmale der Erfindung bei dem Transportsystem nach Anspruch 7 sind, dass es ein Schienensystem und darauf bewegbar angeordnete Wagen umfasst, wobei die Schienen von einem Primärleitersystem umfasst sind, an das zumindest eine vom Wagen umfasste Sekundärspule induktiv gekoppelt ist zur berührungslosen Übertragung elektrischer Leistung und/oder Information.

Von Vorteil ist dabei, dass das Transportsystem auch im Außenbereich oder bei Tieftemperaturumgebung oder feuchter Umgebung einsetzbar ist, weil die Schienen Teil des Primärleitersystems sind und somit vom Strom zumindest geringfügig erwärmt sind. Dadurch ist die Gefahr eines Feuchtigkeitsniederschlags oder Vereisung verringert. Da die Schienen vom Primärleitersystem verwendet sind, sind nur wenige Teile für das System notwendig und es ist einfach und kostengünstig aufzubauen.

Die Räder sind durch die Schienen führbar oder geführt. Somit ist erfüllen die Schienen eine Doppelfunktion, nämlich Leiten des Primärstromes und Führen der Wagen.

Bei einer vorteilhaften Ausgestaltung sind die Räder konisch ausgeführt. Von Vorteil ist dabei, dass eine Selbstzentrierung vorsehbar ist.

Bei einer vorteilhaften Ausgestaltung sind zusätzliche Führungsrollen vorgesehen. Von Vorteil ist dabei, dass in einfacher Weise eine seitliche Führung vorgesehen ist.

Bei einer vorteilhaften Ausgestaltung sind die Schienen als Rohre ausgeführt, insbesondere auf denen die Räder in Berührung stehen. Von Vorteil ist dabei, dass mit wenig Masse eine hohe mechanische und elektrische Tragfähigkeit erreichbar ist.

Bei einer vorteilhaften Ausgestaltung werden die Räder von einem elektrischen Antrieb angetrieben, insbesondere Wirbelstrommotor, Asynchronmotor, Synchronmotor und/oder Reluktanzmotor oder ein anderer Elektromotor. Von Vorteil ist dabei, dass bekannte Antriebsarten verwendbar sind.

Bei einer vorteilhaften Ausgestaltung umfasst der Antrieb ein integriertes Getriebe und/oder Ansteuerelektronik. Von Vorteil ist dabei, dass Umrichterelektronik integrierbar ist.

Bei einer vorteilhaften Ausgestaltung sind die Schienen als Hinleiter einer Schleife des Primärleitersystems ausgebildet und ist parallel zu den Schienen ein Rückleiter vorgesehen. Von Vorteil ist dabei, dass wenig Teile notwendig sind.

Bei einer vorteilhaften Ausgestaltung ist oder sind ein oder mehrere Hinleiter und/oder Rückleiter zumindest teilweise umschlossen, insbesondere in radialer Richtung, von einem Ferritkern einer Sekundärspulenwicklung, insbesondere einem U-förmigen, C-förmigen oder E-förmigem. Von Vorteil ist dabei, dass eine gute Kopplung erreichbar ist und somit ein guter Wirkungsgrad.

Bei einer vorteilhaften Ausgestaltung ist der Rückleiter in einem Halteprofil kraft- und/oder formschlüssig gehalten. Von Vorteil ist dabei, dass das Halteprofil als Kunststoff-Stranggussteil fertigbar ist und somit eine zusätzliche elektrische Isolierung des Rückleiters erreichbar ist bei gleichzeitiger Realisierung der Haltefunktion.

Bei einer vorteilhaften Ausgestaltung ist in das Primärleitersystem ein mittelfrequenter Strom eingeprägt, insbesondere mit einer Frequenz zwischen 10 und 100 kHz. Von Vorteil ist dabei, dass schnelle Änderungen der zu übertragenden Leistung vorsehbar sind und der Skineffekt nicht zu stark ist. Es können also hohe Ströme, insbesondere mehr als 10 Ampere, übertragen werden.

Bei einer vorteilhaften Ausgestaltung ist zur Datenübertragung ein höherfrequenter Wechselstrom überlagert, insbesondere mit einer Mindestfrequenz von 150 kHz. Von Vorteil ist dabei, dass eine Datenübertragung einfach realisierbar ist.

Bei einer vorteilhaften Ausgestaltung sind entlang der Schienen Abstandshalter angeordnet, insbesondere zum Fixieren der Rohre relativ zueinander. Von Vorteil ist dabei, dass diese Abstandshalter aus Kunststoff herstellbar sind und die Schiene stabilisierbar ist.

Bei einer vorteilhaften Ausgestaltung ist am Antrieb eine Platte zum Verbinden mit einer zu transportierenden Last vorgesehen. Von Vorteil ist dabei, dass direkt auf den Antrieb eine Last montierbar ist oder mittels der Platte eine Schnittstelle zum Aufmontieren verschiedener Lasten vorsehbar ist. Außerdem ist Wärme des Antriebs abführbar über die Platte an die Umgebung. Denn die Platte ist für die Wärmeaufspreizung einsetzbar und entlastet den Antrieb in wärmetechnischer Hinsicht sehr.

Weitere Vorteile ergeben sich aus den Unteransprüchen.

Die Erfindung wird nun anhand von Abbildungen näher erläutert:

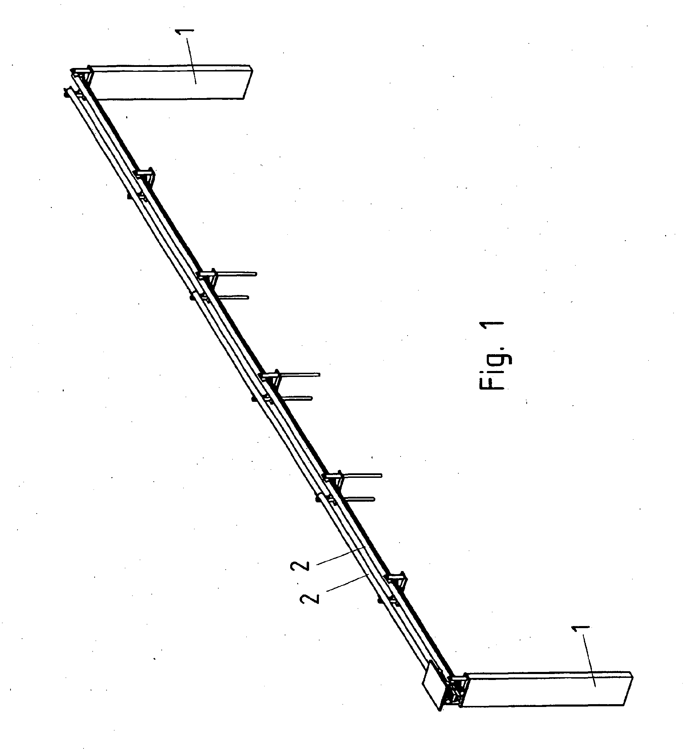

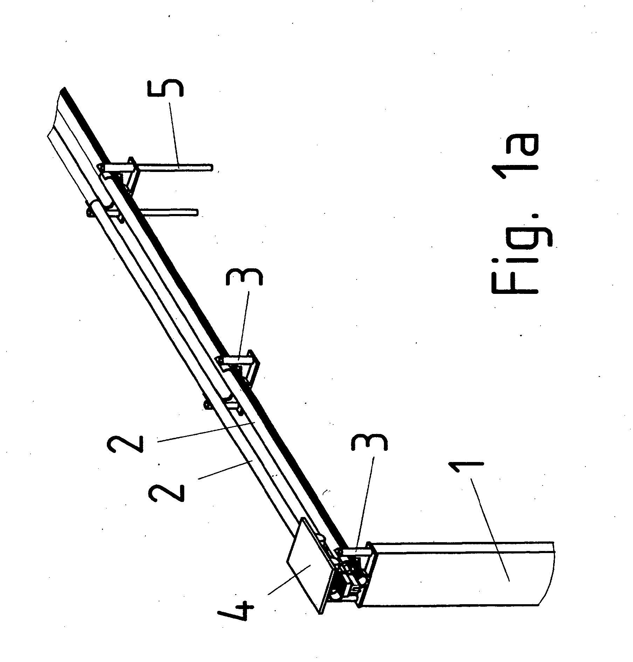

In der Figur 1 ist der stationäre Teil des erfindungsgemäßen Transportsystems in Schrägansicht schematisch gezeichnet.

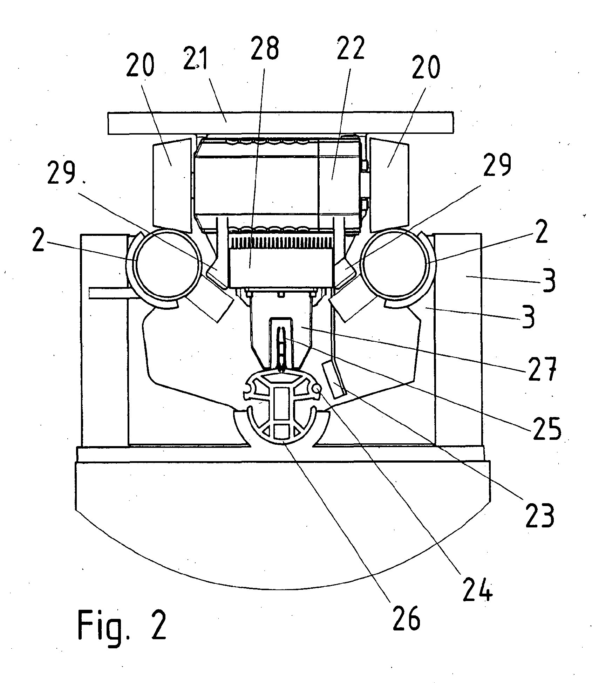

Dabei ist die Strecke von Stützen 1 gehalten. Diese Stützen 1 sind beispielhaft aus Beton und/oder Stahl herstellbar. Die Strecke umfasst dabei Halteelemente, von denen Primärleiter gehalten sind. Dabei sind zwei Hinleiter 2 langgestreckt ausgeführt und ein Rückleiter parallel hierzu angeordnet. Der Rückleiter ist in Figur 1 verdeckt und ist in Figur 2 in der Halterung 25 eingelegt. Somit ist als Material für die beiden Hinleiter Aluminium verwendbar. Denn durch die Wahl zweier parallel geschalteter Hinleiter 2 ist der Widerstand reduziert.

Von einer Einspeisevorrichtung wird mittelfrequenter Wechselstrom in das Primärleitersystem eingespeist, das als Schleife ausgeführt ist, die Hinleiter und Rückleiter umfasst.

Die bewegbar angeordneten Verbraucher sind als Wagen, also Fahrzeuge, ausgeführt und umfassen zumindest eine Sekundärspule, welche induktiv gekoppelt ist an das Primärleitersystem und auf diese Weise berührungslos versorgbar sind mit elektrischer Leistung und Information.

Bei einem weiteren erfindungsgemäßen Ausführungsbeispiel ist entlang der Strecke ein geschlitzter Koaxialleiter 24, der auch als Leckwellenleiter bezeichenbar ist, verlegt, der zur Datenübertragung geeignet ausgeführt ist, wobei die Wagen jeweils zumindest eine Antenne umfassen, welche entlang diesem Koaxialleiter geführt wird. Auf diese Weise ist eine hochfrequente Datenübertragung ausführbar. Somit ist die Datenübertragung sogar redundant ausführbar, nämlich einerseits über den Koaxialleiter und andererseits über die induktive Koppelung der Primärleiter und Sekundärspule.

Vorzugsweise wird der mittelfrequente Wechselstrom-Strom mit einer Frequenz zwischen 10 und 100kHz ins Primärleitersystem eingeprägt. Die genannte Hochfrequenz zur Datenübertragung ist höher frequent vorgesehen.

Wichtig ist bei der Erfindung, dass die Hinleiter 2 nicht nur die Funktion des elektrischen Leitens des elektrischen Primärstroms aufweisen sondern auch mechanische Schienenfunktion für die Wagen aufweisen.

Denn die Räder der Wagen rollen auf den Schienen, also Hinleitern 2, ab und sind dort abgestützt.

Abstandshalter 3 bewirken den konstanten Abstand der Hinleiter 2 zueinander. Sie sind entlang der Strecke in geeigneten Abständen vorgesehen. Zumindest einige der Abstandshalter sind auf den Stützen 1 verbunden zum Abstützen der Primärleiter. Somit sind die Primärleiter über diese Abstandshalter gehalten. Es sind auch Abstandshalter 5 mit Seilhalterungsrohrfortsatz vorgesehen, wobei an dem Seilhalterungsrohrfortsatz Halteseile zur weiteren Stabilisierung des stationären Teils des Transportsystems vorsehbar sind.

Bei einem weiteren erfindungsgemäßen Ausführungsbeispiel ist jeder Hinleiter 2 als Rohr ausgeführt. Somit ist eine hohe mechanische Tragfähigkeit und eine hohe Stromdichte bei geringer Masse herstellbar. Denn insbesondere wegen des bei dem mittelfrequenten Strom wirksamen Skin-Effektes überträgt das Rohr einen hohen Strom.

Trotzdem tritt eine gewisse Erwärmung der Rohre auf, die aber bei Außenanlagen vorteilhaft ist. Denn eine Vereisung oder ein Niederschlagen von Feuchtigkeit ist auf diese Weise verhindert. Sogar wenn der Temperaturunterschied zur Umgebung nur geringfügig ist, ist ein Niederschlagen von Feuchtigkeit vermieden. Somit ist das Transportsystem einerseits für industrielle Anlagen und andererseits für andere Anwendungen im Außenbereich vorteilig verwendbar.

In der Figur 2 ist der Wagen deutlicher erkennbar. Die Räder sind konisch aufgeführt zur Selbstzentrierung des Wagens zwischen den Hinleitern 2, die als Rohre ausgeführt sind. Diese Rohre sind mit den Abstandshaltern verbunden, welche mit dem Grundhalteprofil 26 verbunden sind, in das einerseits ein Koaxialleiter einlegbar ist und andererseits ein Halteprofil 25 einklipsbar ist, das zur Aufnahme des Rückleiters geeignet ausgeführt ist. Insbesondere ist dieser Rückleiter einklipsbar.

Die Räder 20 des Wagens werden vom elektrischen Antrieb 22 angetrieben, der als Elektromotor ausgeführt ist. Dabei umfasst der Antrieb entsprechende Leistungselektronik und Signalelektronik in seinem Gehäuse. Je nach gewünschter Geschwindigkeit ist auch ein Getriebe im Antrieb 22 integriert vorsehbar. Auf dem Gehäuse des Antriebs ist eine Platte 21 vorsehbar.

Am Antrieb ist auch ein elektronisches Gerät 28 mit Leistungselektronik vorsehbar und eine Antenne 23 verbindbar. Dabei ist die Antenne zur Datenübertragung zwischen dem stationären Teil des Transportsystems mit Koaxialleiter 24 vorgesehen, wobei der Koaxialleiter 24 in das Halteprofil 25 einklipsbar ist.

Die Sekundärspule ist in einem U-förmigen Übertragerkopf 27 vorgesehen. Dabei ist ein U-förmiger Ferritkern vorgesehen, der den Rückleiter teilweise umgibt und somit eine gute induktive Koppelung bewirkt. Im U-förmigen Übertragerkopf 27 ist auch ein Kondensator mit der Sekundärspule derart in Reihe oder parallel geschaltet, dass die Resonanzfrequenz der Mittelfrequenz des ins Primärleitersystem eingeprägten Stromes im Wesentlichen entspricht. Somit ist auch über einen großen Luftspalt ein guter Wirkungsgrad erreichbar beim Energieübertragen.

Am Antrieb ist auch eine Halterung für Führungsrollen 29 zur seitlichen Führung vorgesehen. Im Normalbetrieb sollten die Führungsrollen 29 keinen Kontakt haben zum stationären Teil des Transportsystems. Nur bei auftretenden Abweichungen wird der Wagen durch die Führungsrollen in der gewünschten Orientierung gehalten.

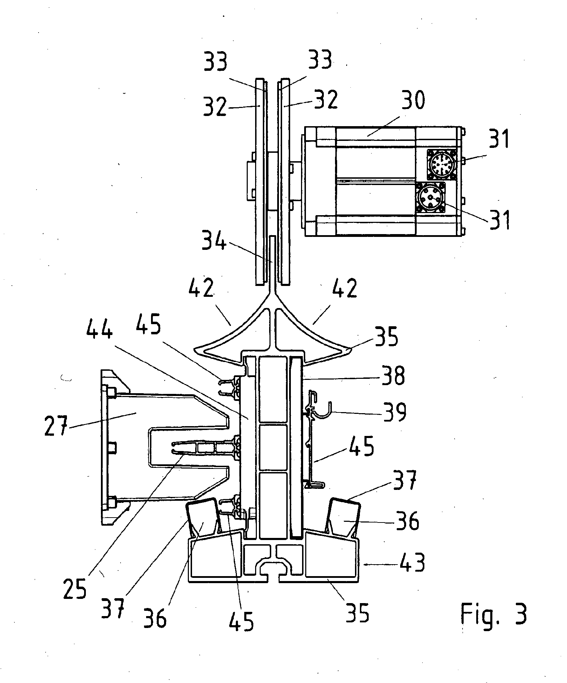

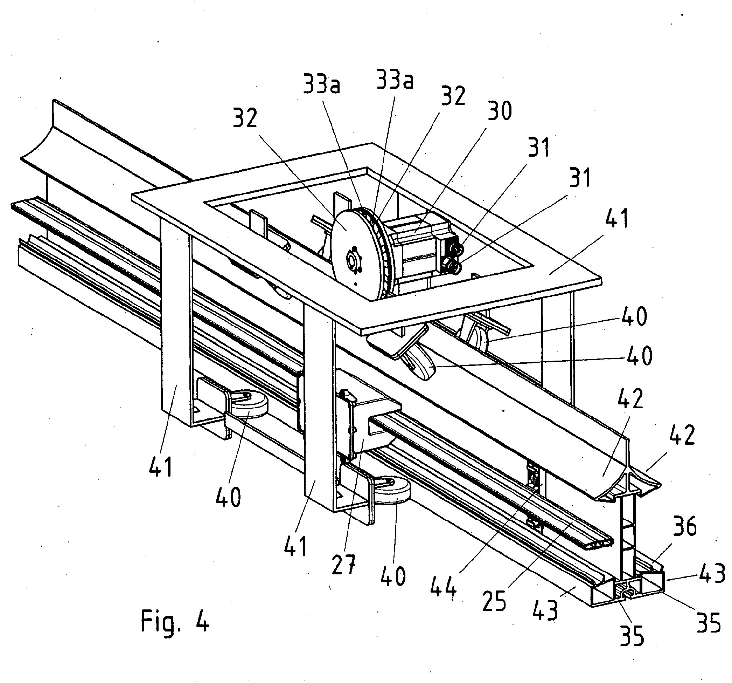

In Figur 3 ist der Schnitt durch ein weiteres erfindungsgemäßes Ausführungsbeispiel gezeigt. Ebenso zeigt Figur 4 ein weiteres Beispiel. Teilweise sind Komponenten und Bauteile weggelassen.

In Figur 3 umfasst der Wagen den Elektromotor 30, der wiederum elektrische Anschlussvorrichtungen 31 aufweist. Der Motor treibt Scheiben 32 an, auf denen ein Magnetbelag 33 mit in Umfangsrichtung aufeinander folgenden, in axialer Richtung abwechselnd magnetisierten Magnetbereichen aufgebracht ist. Der Motor wird bei hoher Drehzahl betrieben, vorzugsweise mehr als 3000 Umdrehungen pro Minute. Je höher die Drehzahl ist, desto größer ist der Wirkungsgrad des Antriebs. Bei 10 000 Umdrehungen pro Minute werden sehr gute Ergebnisse erzielt.

Der Antrieb arbeitet nach dem Wirbelstromprinzip und erzeugt seine Kraft durch die im Schwert 34 des Schienenprofils 35 Wirbelströme, die mit dem durch die Drehbewegung des Motors erzeugten veränderlichen Magnetfeld wechselwirken. Die Vorschubskraft wirkt in Schienenrichtung.

Zur Erzeugung einer Bremsbeschleunigung ist die Drehrichtung des Motors zu verlangsamen oder möglichst umzukehren.

Die den Motor ansteuernde Steuerungselektronik berücksichtigt die Erwärmung des Schwertes durch Modellbildung und steuert den Motor derart, dass die Erwärmung unter einem kritischen Wert gehalten wird.

Das Schienenprofil 35 weist auch einen Aufnahmebereich 36 für Versorgungskabel auf, die den nächsten Schienenabschnitt versorgen. Die Kabel sind sozusagen durchleitbar. Im nächsten Schienenabschnitt kann die durchgeleitete Energie dann den dortigen Primärleitern zur Verfügungsgestellt werden. Die Bereiche 36 sind mit einer Abdeckung 37 versehbar. Dies ist vorzugsweise auch mit einem Magnetfeld abschirmenden Material versehen.

Am Einklemmblech 38 ist eine Halterung 39 für Koaxialleiter vorsehbar. Der Wagen umfasst dann auch eine Antenne, die am Koaxialleiter entlang geführt wird zum Datenaustausch. Alternativ oder zusätzlich ist auch ein Barcode am Aufnahmebereich 45 an der Halterung 39 anbringbar. Es sind auch statt Barcode andere Lesemarken anbringbar. Für den Barcode oder die anderen Lesemarken ist am Wagen optional ein entsprechendes Lesegerät vorsehbar, das zum Ablesen der Informationen geeignet ist und somit eine Positionserfassung ausführbar macht. Die Informationen werden von dem elektronischen Gerät des Wagens verarbeitet und über die Mittel zur Datenübertragung, wie Kosaxialleiter und/oder Funkwellen, einer zentralen Steuerungseinheit gemeldet.

Der Wagen wird mit am Gestänge des Wagens vorgesehenen Führungsrollen 40 geführt, die an Laufflächen (42,43) abrollen können. Dabei dienen die Laufflächen 43 der seitlichen horizontalen Stabilisierung. Die gekrümmten Laufflächen 42 dienen der Stabilisierung der in Gravitationsrichtung. Die Krümmung der Laufflächen 42 führt zusammen mit der zum Gravitationsrichtung schräg angeordneten Führungsrollen zu einer Selbststabilisierung, die insbesondere im Bereich von Kurven wichtig ist. Bei geraden Schienenstrecken wird eine Stabilisierung und Verminderung von Schwingungen um die Ruhelage bewirkt.

Am Schienenprofil 35 ist mittels eines durch Drehen im einen entsprechenden Aufnahmebereich aufweisenden einklemmbaren Kabelkanalhalters 44 wiederum ein Halteprofil 25 vorsehbar. An diesem Halteprofil 25 sind wiederum mehrere Hinleiter kraft- und formschlüssig einklipsbar. Die Rückleiter sind in einem anderen Halteprofil 45 einklipsbar, welche ebenfalls am Kabelkanalhalters 44 befestigbar sind.

In Figur 4 sind durch die Darstellung in Schrägansicht auch die einzelnen in Umfangsrichtung jeweils nebeneinander angeordneten Magnetbereiche 33a sichtbar, die die abwechselnde Magnetisierungsorientierung in axialer Richtung des Elektromotors aufweisen

In Figur 3 und 4 ist das elektronische Gerät nicht gezeigt. Es ist aber ebenfalls vom Wagen umfasst. In Figur 3 ist das Gestänge des Wagens ebenfalls nicht gezeigt. Der Motor 30 und der U-förmige Übertragerkopf 27 sind bei dem Wagen nach Figur 3 über ein Gestänge verbunden.

Bei einem weiteren erfindungsgemäßen Ausführungsbeispiel wird mindestens ein Temperatursensor eingesetzt, der die Umgebungstemperatur misst. Außerdem ist ein weiterer Temperatursensor einsetzbar, der die Temperatur des Schwertes erfasst. Hierzu ist vorteiligerweise ein Infrarot-Temperatursensor verwendbar. Auf diese Weise ist die maximal erlaubte Vorschubskraft erreichbar. Eine Zerstörung des Schwertes ist verhindert.

### Bezugszeichenliste

1 Stütze
2 Primärleiter
3 Abstandshalter
4 Wagen
5 Abstandshalter mit Seilhalterungsrohr
20 Rad
21 Platte
22 Antrieb
23 Antenne
24 Koaxialleiter
25 Halteprofil
26 Grundhalteprofil
27 U-förmiger Übertragerkopf, Pick-Up
28 elektronisches Gerät mit Leistungselektronik
29 Führungsrollen
30 Elektromotor
31 elektrische Anschlussvorrichtungen
32 Scheibe
33 Magnetbelag
33a Magnete mit abwechselnder Magnetisierungsorientierung
34 Schwert
35 Schienenprofil
36 Aufnahmebereich für Versorgungskabel
37 Abdeckung
38 Einklemmblech
39 Halterung für Koaxialleiter
40 Führungsrollen
41 Gestänge
42 gekrümmte Lauffläche
43 Lauffläche
44 Kabelkanalhalter
45 Aufnahmebereich für Barcode oder Lesemarken

## Patentansprüche

1. Transportsystem, umfassend ein Schienensystem und darauf bewegbar angeordnete Wagen (4),
wobei am Schienensystem ein Primärleitersystem vorgesehen ist, an das zumindest eine vom jeweiligen Wagen (4) umfasste Sekundärspule induktiv gekoppelt ist zur berührungslosen Übertragung elektrischer Leistung und/oder Information,
wobei ein geschlitzter Koaxialleiter (24), also Leckwellenleiter, parallel zu Hinleiter und Rückleiter vorgesehen ist, an dem eine Antenne (23) des Wagens (4) zur Hochfrequenz-Datenübertragung entlang bewegbar ist, insbesondere beim Bewegen des Wagens (4),
wobei die Datenübertragung redundant ausgeführt ist, insbesondere einerseits über die induktive Koppelung des Primärleiters (2) zu einer Sekundärwicklung und andererseits über die Koppelung der Antenne (23) zum Primärleiter (2).

2. Transportsystem nach Anspruch 1,
**dadurch gekennzeichnet, dass**
der aus der Sekundärspule versorgte Wagen (4) mittels eines Wirbelstromantriebs am Schienensystem antreibbar ist, insbesondere wobei der Antrieb (22) zumindest eine von einem Elektromotor (30) angetriebene Scheibe (32) umfasst, die abwechselnd orientierte Magnetbereiche umfasst, welche mit einem am Schienensystem ausgebildeten Bereich zusammenwirken, insbesondere wobei der Bereich am herausragendes Schwert (34) am Profil der Schiene ausgebildet ist.

3. Transportsystem nach mindestens einem der vorangegangenen Ansprüche,
**dadurch gekennzeichnet, dass**
die Räder von einem elektrischen Antrieb (22) angetrieben werden, insbesondere Wirbelstrommotor, Asynchronmotor, Synchronmotor und/oder Reluktanzmotor oder ein anderer Elektromotor (30).

4. Transportsystem nach mindestens einem der vorangegangenen Ansprüche,
**dadurch gekennzeichnet, dass**
der Antrieb (22) ein integriertes Getriebe und/oder Ansteuerelektronik, insbesondere Umrichterelektronik, umfasst.

5. Transportsystem nach mindestens einem der vorangegangenen Ansprüche,
**dadurch gekennzeichnet, dass**
die Schienen als Hinleiter einer Schleife des Primärleitersystems ausgebildet sind und parallel zu den Schienen ein Rückleiter vorgesehen ist.

6. Transportsystem nach mindestens einem der vorangegangenen Ansprüche,
**dadurch gekennzeichnet, dass**
ein oder mehrere Hinleiter und/oder Rückleiter zumindest teilweise umschlossen ist oder sind, insbesondere in radialer Richtung, von einem Ferritkern einer Sekundärspulenwicklung, insbesondere einem U-förmigen, C-förmigen oder E-förmigem.

7. Transportsystem nach mindestens einem der vorangegangenen Ansprüche,
**dadurch gekennzeichnet, dass**
in das Primärleitersystem ein mittelfrequenter Strom eingeprägt ist, insbesondere mit einer Frequenz zwischen 10 und 100 kHz.

8. Transportsystem nach mindestens einem der vorangegangenen Ansprüche,
**dadurch gekennzeichnet, dass**
zur Datenübertragung ein höherfrequenter Wechselstrom überlagert ist, insbesondere mit einer Mindestfrequenz von 150 kHz.

9. Transportsystem nach mindestens einem der vorangegangenen Ansprüche,
**dadurch gekennzeichnet, dass**
am Antrieb (22) eine Platte (21) zum Verbinden mit einer zu transportierenden Last vorgesehen ist.

## Claims

1. Transport system, comprising a rail system and carriages (4) movably arranged thereon,
wherein there is provided on the rail system a primary conductor system to which at least one secondary coil comprised by the respective carriage (4) is inductively coupled for contactless transfer of electric power and/or information,
wherein a slotted coaxial conductor (24), i.e. leaky-wave conductor, is provided parallel to forward conductor and return conductor, along which an antenna (23) of the carriage (4) is movable for high-frequency data transfer, in particular upon movement of the carriage (4),
wherein the data transfer is implemented redundantly, in particular on the one hand via the inductive coupling of the primary conductor (2) to a secondary winding and on the other hand via the coupling of the antenna (23) to the primary conductor (2).

2. Transport system according to Claim 1,
**characterised in that**
the carriage (4) supplied from the secondary coil is drivable by means of an eddy-current drive at the rail system, in particular wherein the drive (22) comprises at least one disc (32) driven by an electric motor (30), which disc comprises alternately oriented magnetic regions which interact with a region formed on the rail system, in particular wherein the region is formed on the protruding tongue (34) on the profile of the rail.

3. Transport system according to at least one of the preceding claims,
**characterised in that**
the wheels are driven by an electric drive (22), in particular eddy-current motor, asynchronous motor, synchronous motor and/or reluctance motor or a different electric motor (30).

4. Transport system according to at least one of the preceding claims,
**characterised in that**
the drive (22) comprises an integrated gear unit and/or control electronics, in particular inverter electronics.

5. Transport system according to at least one of the preceding claims,
**characterised in that**
the rails are formed as forward conductors of a loop of the primary conductor system and a return conductor is provided parallel to the rails.

6. Transport system according to at least one of the preceding claims,
**characterised in that**
one or more forward conductors and/or return conductors is or are at least partially enclosed, in particular in a radial direction, by a ferrite core of a secondary coil winding, in particular a U-shaped, C-shaped or E-shaped ferrite core.

7. Transport system according to at least one of the preceding claims,
**characterised in that**
a medium-frequency current, in particular with a frequency between 10 and 100 kHz, is applied to the primary conductor system.

8. Transport system according to at least one of the preceding claims,
**characterised in that**
a high-frequency alternating current, in particular with a minimum frequency of 150 kHz, is superposed for data transfer.

9. Transport system according to at least one of the preceding claims,
**characterised in that**
a plate (21) is provided at the drive (22) for connection to a load to be transported.

## Revendications

1. Système de transport, comprenant un système de rails et des chariots (4) pouvant circuler sur les rails,
sachant qu'il est prévu sur le système de rails un système de conducteurs primaires auquel au moins une bobine secondaire faisant partie du chariot respectif (4) est couplée inductivement pour la transmission sans contact d'énergie électrique et/ou d'informations,
sachant qu'un conducteur coaxial fendu (24), donc un guide d'ondes à fuite, est prévu parallèlement à des conducteurs aller et de retour, conducteur le long duquel peut être déplacée, en particulier lors du déplacement du chariot (4), une antenne (23) du chariot (4) pour la transmission de données à haute fréquence,
sachant que la transmission de données est réalisée redondante, en particulier d'une part via le couplage inductif du conducteur primaire (2) à un bobinage secondaire et d'autre part via le couplage de l'antenne (23) au conducteur primaire (2).

2. Système de transport selon la revendication 1, **caractérisé en ce que** le chariot (4) alimenté à partir de la bobine secondaire peut être entraîné au moyen d'un entraînement à courants de Foucault sur le système de rails, sachant notamment que l'entraînement (22) comprend au moins un disque (32) qui est entraîné par un moteur électrique (30) et qui comprend des régions magnétiques alternativement orientées qui coopèrent avec une région formée sur le système de rails, sachant notamment que la région est formée sur la lame (34) dépassant sur le profilé de rail.

3. Système de transport selon au moins une des revendications précédentes, **caractérisé en ce que** les roues sont entraînées par un entraînement électrique (22), en particulier un moteur à courants de Foucault, un moteur asynchrone, un moteur synchrone et/ou un moteur à réluctance, ou un autre moteur électrique (30).

4. Système de transport selon au moins une des revendications précédentes, **caractérisé en ce que** l'entraînement (22) comprend une transmission intégrée et/ou un équipement électronique de commande, en particulier un équipement électronique à convertisseur.

5. Système de transport selon au moins une des revendications précédentes, **caractérisé en ce que** les rails sont conçus comme conducteurs aller d'une boucle du système de conducteurs primaires, et un conducteur de retour est prévu parallèlement aux rails.

6. Système de transport selon au moins une des revendications précédentes, **caractérisé en ce qu'**un ou plusieurs conducteurs aller et/ou de retour est ou sont au moins partiellement entourés, en particulier en direction radiale, par un tore de ferrite d'un bobinage secondaire, notamment d'un bobinage en forme de U, de C ou de E.

7. Système de transport selon au moins une des revendications précédentes, **caractérisé en ce qu'**un courant à moyenne fréquence, en particulier avec une fréquence comprise entre 10 et 100 kHz, est injecté dans le système de conducteurs primaires.

8. Système de transport selon au moins une des revendications précédentes, **caractérisé en ce qu'**un courant alternatif à haute fréquence, en particulier avec une fréquence minimale de 150 kHz, est superposé pour la transmission de données.

9. Système de transport selon au moins une des revendications précédentes, **caractérisé en ce qu'**une plaque (21) pour la liaison avec une charge à transporter est prévue sur l'entraînement (22).
